# EUROPÄISCHE PATENTSCHRIFT

(11) **EP 1 783 379 B1**
(45) Veröffentlichungstag und Bekanntmachung des Hinweises auf die Patenterteilung: **26.11.2008**
(21) Anmeldenummer: 06122661.9
(22) Anmeldetag: 20.10.2006
(51) Int. Cl.: F16B 13/06

(54) **Spreizanker**
Expansion anchor
Dispositif d'ancrage expansible

(30) Priorität: 03.11.2005 DE 102005000148
(43) Veröffentlichungstag der Anmeldung: 09.05.2007
(73) Patentinhaber: HILTI Aktiengesellschaft, 9494 Schaan (LI)
(72) Erfinder: Rosenkranz, Falk, 9658, Wildhaus (CH)
(74) Vertreter: Wildi, Roland

(56) Entgegenhaltungen:
- DE-A1- 2 150 572
- DE-A1- 2 925 603

## Beschreibung

### Technisches Gebiet

Die Erfindung betrifft einen Spreizanker zur Verankerung in einem Bohrloch, der im Oberbegriff des Patentanspruchs 1 genannten Art.

### Stand der Technik

Aus der DE 195 41 564 A1 ist ein Spreizanker zur Verankerung in einem Bohrloch mit einem Schaft bekannt, der eine Längsachse sowie ein erstes Ende und ein dem ersten Ende gegenüberliegendes zweites Ende aufweist. An dem Schaft ist ein Lastangriffsmittel vorgesehen, das sich bis zum ersten Ende erstreckt. Zur Ausbildung eines Verankerungsmechanismus sind ein sich zum zweiten Ende erweiternder Spreizkörper an dem Schaft sowie eine den Spreizkörper zumindest bereichsweise umgebende Spreizhülse vorgesehen, wobei die Spreizhülse durch den Spreizkörper aufweitbar ist.

Derartige Spreizanker dienen der Befestigung eines Bauteils an einem Untergrund, beispielsweise aus Beton und werden vorzugsweise hämmernd in ein zuvor erstelltes Bohrloch gesetzt. Das Lastangriffsmittel ist z. B. als Aussengewinde ausgebildet, auf welches eine Mutter anordnenbar ist. Zur Verankerung des Spreizankers im Bohrloch wird die Mutter aufgeschraubt, wobei diese sich an dem zu befestigenden Bauteil abstützt. Dabei wird der Schaft mit dem Spreizkörper axial verschoben und die Spreizhülse aufgeweitet, wobei die Spreizhülse gegen die Bohrlochwandung gepresst wird. Solche Spreizanker sind einfach sowie sicher setzbar und dabei wirtschaftlich herstellbar, weshalb sich diese in der Praxis bewährt haben.

Nachteilig an der bekannten Lösung ist, dass Medien, wie beispielsweise Wasser, ungehindert in den Spalt zwischen dem Spreizanker und der Bohrlochwandung eindringen können, was zu Korrosionsschäden an dem Spreizanker und somit zu einer Reduktion der Tragfähigkeit der erstellten Befestigung führt. Zudem können auch Korrosionsschäden an der Bewehrung auftreten, die bei der Erstellung des Bohrlochs angeschnitten wurde, was zu einer Reduktion der Tragfähigkeit der Konstruktion führen kann.

Aus der DE 102 04 591 A1 ist ein Spreizanker mit einem Füllkanal bekannt, durch den nach dem Verankern des Spreizankers im Bohrloch Mörtel in das Bohrloch einfüllbar ist. Durch eine Austrittsöffnung in einer Lochscheibe kann der Mörtel austreten, was eine Kontrolle der vollständigen Verfüllung des im Bohrloch verbliebenen Spaltes ermöglicht. Der Spalt ist gegen eindringende Medien abgedichtet.

Nachteilig an der bekannten Lösung ist, dass mehrere Komponenten gehandhabt werden müssen und dass mehrere Arbeitsschritte zur Erstellung der Verankerung erforderlich sind. Zudem sind für eine möglichst vollständige Aushärtung des Mörtels bestimmte Umgebungsbedingungen, z. B. bezüglich der Temperatur oder der vorhandenen Feuchtigkeit, erforderlich, welche auf einer Baustelle nicht immer gegeben sind. Des Weiteren ist bei der Verwendung eines Mörtels zumeist die Einhaltung besonderer Arbeitsmassnahmen erforderlich, welche den Arbeitsaufwand zum Setzen des Spreizankers erhöhen. Des Weiteren ist die Lagerfähigkeit des Mörtels beziehungsweise zumindest einzelner Komponenten begrenzt. Bei der Verwendung eines Harzes anstelle eines Mörtels zum Verfüllen des Spaltes zwischen dem Spreizanker und der Bohrlochwandung resultieren im Wesentlichen die gleichen Nachteile wie bei einem Mörtel.

Die DE 29 25 603 A1 offenbart einen Spreizanker, der zwischen einer von einem Spreizkonus aufweitbaren Spreizhülse und einer Abstandshülse einen hülsenförmigen, am Schaft aufgeschraubten Dichtring mit einen einstückig angeformten, radial nach aussen abstehenden Flanschteil aufweist, der zwischen die einander zugewandten Stirnseiten der Abstandshülse und der Spreizhülse eingreift sowie umfangsseitig eine mit der Bohrlochwandung in Anlage bringbaren Kontaktfläche aufweist. Beim Verspannen wird der Flanschteil gequetscht und quillt über den Aussendurchmesser der Abstandshülse und der Spreizhülse vor, so dass zur Schaffung einer Abdichtung dessen radiale Kontaktfläche mit der Bohrlochwandung in Anlage kommt.

### Darstellung der Erfindung

Aufgabe der Erfindung ist es, einen Spreizanker zu schaffen, der einfach zu setzen ist und bei dem eine einwandfreie Abdichtung des Spaltes zwischen dem gesetzten Spreizanker und der Bohrlochwandung gewährleistet ist, ohne die oben genannten Nachteile aufzuweisen.

Die Aufgabe ist durch die Merkmale des unabhängigen Anspruchs gelöst. Vorteilhafte Weiterbildungen sind in den Unteransprüchen dargelegt.

Gemäss der Erfindung weist ein Spreizanker zur Verankerung in einem Bohrloch einen Schaft auf, der eine Längsachse sowie ein erstes Ende und ein dem ersten Ende gegenüberliegendes zweites Ende aufweist. An dem Schaft ist ein Lastangriffsmittel vorgesehen, das sich bis zum ersten Ende erstreckt. An dem Schaft ist weiter ein Verankerungsmechanismus zur Verankerung des Spreizankers im Bohrloch vorgesehen. Eine Dichtung ist zwischen dem Verankerungsmechanismus und dem ersten Ende des Schafts vorgesehen, die eine zumindest bereichsweise mit der Bohrlochwandung in Anlage bringbare Kontaktfläche aufweist. Die Dichtung weist an der zumindest bereichsweise mit der Bohrlochwandung in Anlage bringbaren Kontaktfläche über ihre axiale Erstreckung unterschiedliche radiale Erstreckungen auf.

Die maximale radiale Erweiterung beziehungsweise der maximale Aussendurchmesser der umfänglich an dem Schaft angeordneten Dichtung ist vorteilhaft derart ausgebildet, dass dieser grösser als der Innendurchmesser des Bohrlochs ist, in das der Spreizanker gesetzt wird. Die Dichtung bildet eine Ummantelung, die den Schaft zumindest bereichsweise umgibt. Der Spreizanker wird schlagend, beispielsweise mit einem Hammer, in das zuvor erstellte Bohrloch eingetrieben, wobei zumindest ein dem ersten Ende zugewandter Bereich der Dichtung mit einem Bereich der Bohrlochwandung in Anlage kommt und somit den Spalt zwischen dem Spreizanker und der Bohrlochwandung vollständig abdichtet. Vorteilhaft ist die Dichtung gegen aggressive Medien beständig.

Der Spreizanker weist eine integrierte Dichtfunktion auf. Zum Setzen des Spreizankers ist die Anzahl der Arbeitsschritte mit einem herkömmlichen Spreizanker ohne eine Abdichtfunktion vergleichbar, wobei der erfindungsgemässe Spreizanker nahezu unbegrenzt lagerbar ist. Die Anforderungen an die Umgebungsbedingungen vor Ort sind wesentlich geringer als bei einer Abdichtung mit einem Mörtel oder einem Harz, was den Anwendungsbereich des erfindungsgemässen Spreizankers wesentlich vergrössert. Ein wesentlicher Vorteil des erfindungsgemässen Spreizankers ist des Weiteren, dass keine besonderen Arbeitsmassnahmen bei der Anwendung des Spreizankers zu berücksichtigen sind. Zudem ist der Spreizanker problemlos auch bei Anwendungen über dem Kopf anwendbar. Alles in allem kann festgestellt werden, dass der erfindungsgemässe Spreizanker gegenüber den herkömmlichen Spreizankern wesentlich einfacher händelbar und setzbar sowie dieser wirtschaftlich herstellbar ist.

Vorzugsweise ist die Dichtung als eine Beschichtung ausgebildet ist, die zur Schaffung eines einteiligen Elementes werkseitig stoffschlüssig auf den Schaft aufgebracht wird. Beispielsweise ist die Beschichtung mit einem Polymer-Beschichtungsverfahren hergestellt oder der entsprechende Ankerbereich wird im Spritzgiessverfahren mit einer Kunststoffschicht ummantelt.

Bevorzugt ist die Dichtung zumindest bereichsweise in Richtung des ersten Endes bezogen auf die Längsachse des Schafts radial zunehmend ausgebildet. Die Dichtung weist in dieser Ausführungsform zumindest einen Abschnitt mit einer keil- beziehungsweise konusförmigen Ausgestaltung auf, die sich entgegen der Setzrichtung des Spreizankers aufweitet, wodurch ein leichtes Eintreiben des erfindungsgemässen Spreizankers ermöglicht ist.

Vorzugsweise ist die Dichtung als eine Abfolge von mehreren Kegelstümpfen ausgebildet, wobei deren grössere Grundfläche dem ersten Ende des Schaftes zugewandt ist. Diese vorteilhafte Ausführung des erfindungsgemässen Spreizankers weist nicht nur mehrere über die axiale Erstreckung der Dichtung verteilte Abdichtungsbereiche sondern auch eine robuste Ausgestaltung der Dichtung auf. Das hämmernde Eintreiben des Spreizankers wird durch eine solch ausgestaltete Dichtung nur unwesentlich behindert.

Bevorzugt weist die Dichtung mehrere radial umlaufend angeordnete Erhebungen auf, womit über die axiale Länge in Richtung der Längsachse des Spreizankers mehrere Abdichtstellen vorhanden sind. Da die Kontaktfläche zwischen der Dichtung und der Bohrlochwandung auf mehrere, einzelne Bereiche reduziert ist, lässt sich der Spreizanker leicht eintreiben. Beispielsweise sind die Erhebungen als radial umlaufende Rippen oder als Lamellen mit einem mehreckigen Querschnitt ausgebildet. Alternativ weisen die Erhebungen eine lippenförmige Ausgestaltung auf, wobei das freie Ende der Erhebungen vorteilhaft jeweils dem ersten Ende des Schafts zugewandt ausgerichtet ist. In einer weiteren Ausführungsform kann die Dichtung auch mehrere, unterschiedliche Ausgestaltungen von radial umlaufend angeordneten Erhebungen aufweisen.

Vorzugsweise ist die Dichtung aus einem auf den Schaft des Spreizankers wickelbaren Band gebildet, dessen Querschnitt keilförmig ausgebildet ist. Das Band wird mit dem schmaleren Randbereich in einem Bereich zwischen dem Verankerungsmechanismus und dem ersten Ende einmal oder mehrmals um den Schaft gewickelt, wobei eine konusförmige Dichtung des Spreizankers entsteht. Der Spreizanker wird entweder bei dessen Herstellung im Werk oder auf der Baustelle mit dem Band versehen. Das Band weist vorteilhaft eine Klebebeschichtung auf, die einerseits die Haftung des Bandes an dem Schaft und andererseits, sofern erforderlich, die Haftung an dem Band an sich gewährleistet, und ist wie ein Klebeband an einem Spreizanker applizierbar. Die Klebebeschichtung ist vorteilhaft mit einer entfernbaren Abdeckfolie versehen. Das Band kann beispielsweise werkseitig an dem Schaft des Spreizankers angeordnet sein oder dem Anwender als ein separates Element zur nachträglichen Anordnung zur Verfügung gestellt werden. Der Anwender hat so die Möglichkeit je nach Wunsch einen Spreizanker mit oder ohne integrierte Dichtfunktion zu setzen. Allfällige beim Wickeln des Bandes entstehende Spalte, z. B. am Ende des Bandes, werden beim Setzen des Spreizankers verpresst, so dass keine Undichtigkeiten beim gesetzten Spreizanker gegeben sind.

Diese Ausführungsform des erfindungsgemässen Spreizankers ist beispielsweise bei Verankerungsgründen vorteilhaft, welche aufgrund ihrer Materialeigenschaften zu Ausbrüchen im Bereich des Bohrlochmundes bei der Erstellung des Bohrlochs neigen. Die Dichtfunktion des Spreizankers lässt sich bei dieser Ausführungsform einfach variieren. Durch eine entsprechende Anzahl von Wicklungen des Bandes wird die erforderliche beziehungsweise gewünschte radiale Erstreckung der Dichtung für eine ausreichende Abdichtung des Spaltes zwischen dem Spreizanker und der Bohrlochwandung geschaffen. Die Lagerfähigkeit bei dieser Ausführungsform des Spreizankers wird lediglich durch die Eigenschaften der Klebebeschichtung des Bandes beschränkt, wobei diese üblicherweise jedoch wesentlich grösser als die Lagerfähigkeit eines Mörtel- oder Harzsystems ist. Auch bei dieser Ausführungsform findet keine Aushärtung der Dichtung statt. Ebenfalls werden nur geringe Anforderungen an die Umgebungsbedingungen vor Ort gestellt, was den Anwendungsbereich des erfindungsgemässen Spreizankers wesentlich vergrössert, wobei weitgehend keine besonderen Arbeitsmassnahmen zu berücksichtigen sind. Auch dieser Spreizanker ist problemlos für Anwendungen über dem Kopf anwendbar.

Vorzugsweise ist die Dichtung aus einem verformbaren Material gefertigt, dass vorteilhaft weicher als der Verankerungsgrund und als der Stahl des Spreizankers ist. Dadurch wird die Dichtung beim Eintreiben des Spreizankers deformiert und gegen die Bohrlochwandung gepresst.

Vorteilhafterweise weist die Dichtung elastische Verformungsanteile auf, welche auch bei einer unebenen Ausgestaltung der Bohrlochwandung für eine einwandfreie Abdichtung des Spaltes zwischen dem Spreizanker und der Bohrlochwandung sorgen. Zudem können die elastischen Verformungsanteile der Dichtung allfällige thermisch bedingte Dimensionsänderungen kompensieren. Vorteilhaft weist die Dichtung neben elastischen auch plastische Verformungsanteile auf.

Bevorzugt ist die Dichtung aus einem thermoplastisch verarbeitbaren Material, wie beispielsweise aus einem Thermoplast, aus einem thermoplastischen Elastomer oder aus einem elastomerähnlichen Thermoplasten gefertigt. Diese Materialien zeichnen sich durch wirtschaftliche Verarbeitung mit etablierten Verfahren, wie Wirbelsintern oder Spritzgiessen, sowie durch ihren geringen Materialpreis aus. Zudem sind viele dieser Materialien beständig gegen baustoffrelevante Medien und praktisch in jeder gewünschten Materialhärte verfügbar. Beispiele für thermoplastisch verarbeitbare Materialien sind PE (Polyethylen), PA (Polyamid), POM (Polyoxymethylen), PP (Polypropylen), EVA (Ethylenvinylacetat), TPU (thermoplastisches Polyurethan), TPA (thermoplastisches Polyamidelastomer), TEEE (Polyetheresterelastomer), TPS (SEBS: Styrolethylenbuthylenstyrol) oder TPV (vernetztes Elastomer in thermoplastischer Matrix), wobei diese Beispiele nicht abschliessend sind.

Alternativ ist die Dichtung aus einem vernetzten Elastomer gefertigt. Diese Materialien weisen eine hohe thermische Beständigkeit und hohe Medienbeständigkeit, insbesondere gegenüber thermoplastischen Elastomeren auf. Des Weiteren weisen die vernetzten Elastomere eine geringere Kriech- und Relaxationsneigung als thermoplastische Elastomere auf. Auch zeichnen sich vernetzte Elastomere durch ihren geringen Materialpreis aus. Ein Beispiel für ein mögliches vernetztes Elastomer ist EPDM (Ethylen-Propylen-DienKautschuk).

In einer weiteren alternativen Ausführungsform ist die Dichtung aus einem Metall oder aus einer Legierung gefertigt, die vorteilhaft beim Setzen des Spreizankers verformbar ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1: Einen Längsschnitt durch ein erstes Ausführungsbeispiel des erfindungsgemässen Spreizankers im gesetzten Zustand;
- Fig. 2: eine Seitenansicht des Spreizankers gem. Fig. 1;
- Fig.3: eine Seitenansicht eines zweiten Ausführungsbeispiels des erfindungsgemässen Spreizankers;
- Fig. 4: einen Längsschnitt durch ein drittes Ausführungsbeispiel des erfindungsgemässen Spreizankers;
- Fig. 5: eine Seitenansicht eines vierten Ausführungsbeispiels des erfindungsgemässen Spreizankers;
- Fig. 6: eine Ansicht eines weiteren Ausführungsbeispiels des erfindungsgemässen Spreizankers in Perspektive; und
- Fig. 7: einen Längsschnitt durch das Band für den Spreizanker gem. Fig. 6.

Grundsätzlich sind in den Figuren gleiche Teile mit den gleichen Bezugszeichen versehen.

Wege zur Ausführung der Erfindung

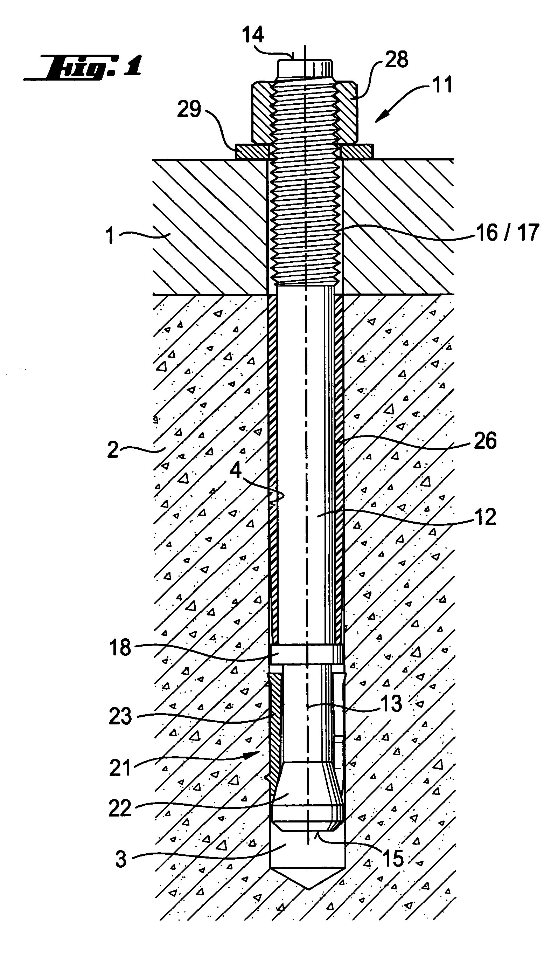

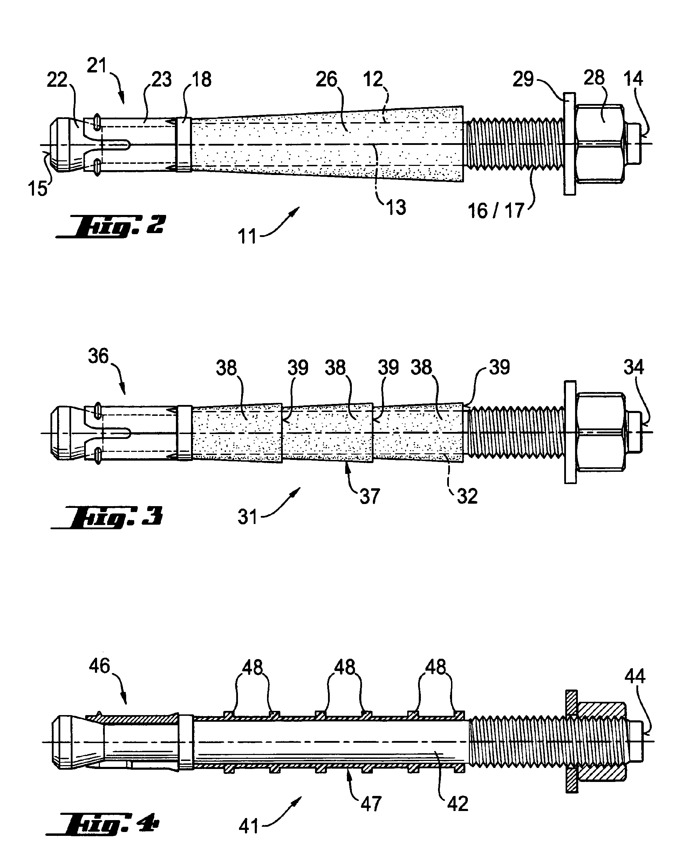

Das erste, in den Fig. 1 und 2 dargestellte Ausführungsbeispiel des erfindungsgemässen Spreizankers 11 umfasst einen Schaft 12, der eine Längsachse 13 sowie ein erstes Ende 14 und ein dem ersten Ende 14 gegenüberliegendes zweites Ende 15 aufweist. An dem Schaft 12 ist als Lastangriffsmittel 16 ein Aussengewinde 17 vorgesehen, das sich bis zum ersten Ende 14 erstreckt. Zur Ausbildung eines Verankerungsmechanismus 21 sind ein sich zum zweiten Ende 15 erweiternder Spreizkörper 22 an dem Schaft 12 sowie eine den Spreizkörper 22 zumindest bereichsweise umgebende Spreizhülse 23 vorgesehen, wobei die Spreizhülse 23 durch den Spreizkörper 22 aufweitbar ist.

Weiter umfasst der Spreizanker 11 eine Dichtung 26, die zwischen dem Verankerungsmechanismus 21 und dem ersten Ende 14 des Schafts 12 vorgesehen ist. Die Dichtung 26 ist als eine Beschichtung ausgebildet und weist über ihre axiale Erstreckung entlang der Längsachse 13 des Schafts 12 unterschiedliche radiale Erstreckungen auf. Die Dichtung 26 ist in Richtung des ersten Endes 14 bezogen auf die Längsachse 13 des Schafts 12 radial zunehmend ausgebildet. Die Dichtung 26 ist aus einem verformbaren, thermoplastisch verarbeitbaren Material gefertigt, das elastische und vorteilhaft plastische Verformungsanteile aufweist.

Zur Befestigung eines Bauteils 1 an einem Untergrund 2, wie z. B. an einer Betondecke, wird in einem ersten Schritt ein Bohrloch 3 in dem Untergrund 2 erstellt. Anschliessend wird der Spreizanker 11 mit einem Hammer in das Bohrloch 3 eingetrieben, wobei die Dichtung 26 zumindest bereichsweise mit der Bohrlochwandung 4 in Anlage kommt. Zur Verankerung des Spreizankers 11 in dem Bohrloch 3 wird eine Mutter 28 mit einer Unterlegscheibe 29 an dem Aussengewinde 17 angeordnet und durch Drehen der Mutter 28 der Spreizanker 11 verspannt, wobei sich die Mutter 28 über die Unterlegscheibe 29 an dem Bauteil 1 abstützt und der Schaft 12 in axialer Richtung verschoben wird. Dabei wird die Spreizhülse 23 von dem Spreizkörper 22 aufgeweitet und an die Bohrlochwandung 4 gepresst. An dem Schaft 12 ist ein radial umlaufender Anschlag 18 für die Spreizhülse 23 vorgesehen, der eine Verschiebung der Spreizhülse 23 parallel zu der Längsachse 13 beim Einschlagen in Richtung des ersten Endes 14 des Schafts 12 begrenzt.

Der Spreizanker 31 gemäss der Figur 3 weist zwischen dem Verankerungsmechanismus 36 und dem ersten Ende 34 des Schafts 32 eine als Beschichtung ausgebildete Dichtung 37 auf, die als eine Abfolge von mehreren Kegelstümpfen 38 ausgebildet ist, wobei deren grössere Grundfläche 39 dem ersten Ende 34 des Schafts 32 zugewandt ist. Die Dichtung 37 ist aus einem vernetzten Elastomer gefertigt.

Der Spreizanker 41 gemäss der Figur 4 weist zwischen dem Verankerungsmechanismus 46 und dem ersten Ende 44 des Schafts 42 eine als Beschichtung ausgebildete Dichtung 47 auf, die mehrere radial umlaufend angeordnete Rippen mit einem rechteckigen Querschnitt als Erhebungen 48 aufweist.

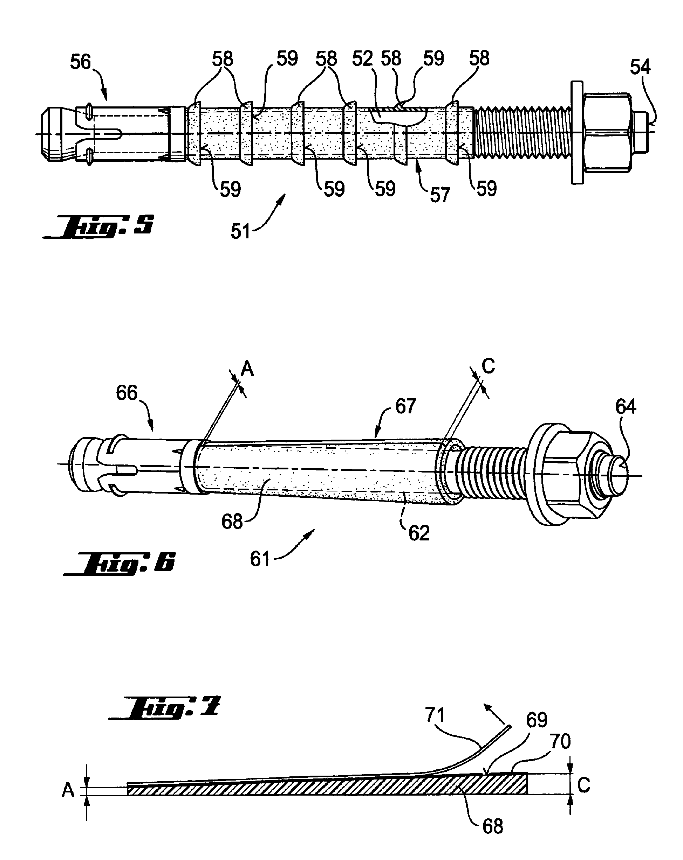

Bei dem in der Figur 5 dargestellten Spreizanker 51 weisen die radial umlaufend angeordneten Erhebungen 58 der als Beschichtung ausgebildeten Dichtung 57, die zwischen dem Verankerungsmechanismus 56 und dem ersten Ende 54 des Schafts 52 vorgesehen ist, im Querschnitt eine lippenförmige Ausgestaltung auf, deren freien Enden 59 jeweils dem ersten Ende 54 des Schafts 52 zugewandt sind.

Das in den Figuren 6 und 7 dargestellte Ausführungsbeispiel des erfindungsgemässen Spreizankers 61 umfasst ebenfalls einen Schaft 62, an dem eine Dichtung 67 aus einem auf den Schaft 62 des Spreizankers 61 gewickelten Band 68 gebildet ist. Die Dichtung 67 ist zwischen dem Verankerungsmechanismus 66 und dem ersten Ende 64 des Schafts 52 vorgesehen. Das Band 68 weist einen keilförmig ausgebildeten Querschnitt mit einer ersten Dicke A und einer zweiten Dicke C auf, wobei die zweite Dicke C grösser als die erste Dicke A ist.

Das Band 68 ist auf einer Seite 69 mit einem Klebstoff 70 beschichtet, der mit einer Abdeckfolie 71 abgedeckt ist, welche vor der Anordnung des Bandes 68 an dem Schaft 62 entfernt wird.

Das Band 68 wird mit dem schmaleren Randbereich, der die erste Dicke A aufweist, im Bereich oberhalb des Verankerungsmechanismus 66, der dem ersten Ende 64 zugewandt ist, und beabstandet zum ersten Ende 64 mehrmals um den Schaft 62 gewickelt, wobei eine konusförmige Dichtung 67 des Spreizankers 61 entsteht.

## Patentansprüche

1. Spreizanker zur Verankerung in einem Bohrloch (3) mit einem Schaft (12; 32; 42; 52; 62), der eine Längsachse (13) sowie ein erstes Ende (14; 34; 44; 54; 64) und ein dem ersten Ende (14; 34; 44; 54; 64) gegenüberliegendes zweites Ende (15) aufweist, wobei ein Lastangriffsmittel (16) an dem Schaft (12; 32; 42; 52; 62), das sich bis zum ersten Ende (14; 34; 44; 54; 64) erstreckt, und ein Verankerungsmechanismus (21; 46; 56; 66) an dem Schaft (12; 32; 42; 52; 62) vorgesehen sind, wobei eine Dichtung (26; 37; 47; 57; 67) zwischen dem Verankerungsmechanismus (21; 46; 56; 66) und dem ersten Ende (14; 34; 44; 54; 64) des Schafts (12; 32; 42; 52; 62) vorgesehen ist, die eine zumindest bereichsweise mit der Bohrlochwandung in Anlage bringbare Kontaktfläche aufweist, **dadurch gekennzeichnet, dass** die Dichtung (26; 37; 47; 57; 67) an der zumindest bereichsweise mit der Bohrlochwandung in Anlage bringbaren Kontaktfläche über ihre axiale Erstreckung unterschiedliche radiale Erstreckungen aufweist.

2. Spreizanker nach Anspruch 1, **dadurch gekennzeichnet, dass** die Dichtung (26; 37; 67) als eine Beschichtung ausgebildet ist.

3. Spreizanker nach Anspruch 1 oder 2, **dadurch gekennzeichnet, dass** die Dichtung (26; 37; 67) zumindest bereichsweise in Richtung des ersten Endes (14; 34; 64) bezogen auf die Längsachse (13) des Schafts (12; 32; 62) radial zunehmend ausgebildet ist.

4. Spreizanker nach einem der Ansprüche 1 bis 3, **dadurch gekennzeichnet, dass** die Dichtung (37) als eine Abfolge von mehreren Kegelstümpfen (38) ausgebildet ist, wobei deren grössere Grundfläche (39) dem ersten Ende (34) des Schaftes (32) zugewandt ist.

5. Spreizanker nach Anspruch 1 oder 2, **dadurch gekennzeichnet, dass** die Dichtung (47; 57) mehrere radial umlaufend angeordnete Erhebungen (48; 58) aufweist.

6. Spreizanker nach Anspruch 1, **dadurch gekennzeichnet, dass** die Dichtung (67) aus einem auf den Schaft (62) des Spreizankers (61) wickelbaren Band (68) gebildet ist, dessen Querschnitt keilförmig ausgebildet ist.

7. Spreizanker nach einem der Ansprüche 1 bis 5, **dadurch gekennzeichnet, dass** die Dichtung (26; 37; 47; 57; 67) aus einem verformbaren Material gefertigt ist.

8. Spreizanker nach Anspruch 6, **dadurch gekennzeichnet, dass** die Dichtung (26; 37; 47; 57; 67) elastische und optional plastische Verformungsanteile aufweist.

9. Spreizanker nach einem der Ansprüche 1 bis 8, **dadurch gekennzeichnet, dass** die Dichtung (26) aus einem thermoplastisch verarbeitbaren Material gefertigt ist.

10. Spreizanker nach einem der Ansprüche 1 bis 8, **dadurch gekennzeichnet, dass** die Dichtung (37) aus einem vernetzten Elastomer gefertigt ist.

## Claims

1. Expansion anchor to be set in a drilled hole (3), having a shank (12; 32; 42; 52; 62) which features a longitudinal axis (13) and a first extremity (14; 34; 44; 54; 64) and a second extremity (15) situated opposite the first extremity (14; 34; 44; 54; 64), there being provided a load engagement means (16) on the shank (12; 32; 42; 54; 62) which load engagement means extends as far as the first extremity (14; 34; 44; 54; 64), and an anchoring mechanism (21; 46; 56; 66) on the shank (12; 32; 42; 52; 62), with a seal (26; 37; 47; 57; 67) being provided between the anchoring mechanism (21; 46; 56; 66) and the first extremity (14; 34; 44; 54; 64) of the shank (12; 32; 42; 52; 62), which seal has a contact surface that is adapted to be brought into contact at least in certain areas with the sides of the drilled hole, **characterised in that** on the contact surface that is adapted to be brought into contact at least in certain areas with the sides of the drilled hole, the seal (26; 37; 47; 57; 67) features varying radial extensions along its axial extension.

2. Expansion anchor according to claim 1, **characterised in that** the seal (26, 37, 67) is designed in the form of a coating.

3. Expansion anchor according to claim 1 or 2, **characterised in that** the seal (26; 37; 67) is designed to increase radially in size, at least in certain areas towards the first extremity (14; 34; 64), in relation to the longitudinal axis of the shank (12; 32; 62).

4. Expansion anchor according to any one of claims 1 to 3, **characterised in that** the seal (37) is designed as a sequence of multiple truncated cones (38), with the larger base surface (39) thereof situated facing the first extremity (34) of the shank (32).

5. Expansion anchor according to claim 1 or 2, **characterised in that** the seal (47; 57) incorporates a plurality of raised areas (48; 58) arranged radially all round it.

6. Expansion anchor according to claim 1**, characterised in that t**he seal (67) is constituted from a strip (68) which is adapted to be wound onto the shank (62) of the expansion anchor (61) and the cross-section of which is cuneiform in design.

7. Expansion anchor according to any one of claims 1 to 5, **characterised in that** the seal (26; 37; 47; 57; 67) is manufactured from a deformable material.

8. Expansion anchor according to claim 6, **characterised in that** the seal (26; 37; 47; 57; 67) incorporates elastic and optionally plastic deformation portions.

9. Expansion anchor according to any one of claims 1 to 8, **characterised in that** the seal (26) is manufactured from a thermoplastically workable material.

10. Expansion anchor according to any one of claims 1 to 8, **characterised in that** the seal (37) is manufactured from a cross-linked elastomer.

## Revendications

1. Dispositif d'ancrage à expansion pour ancrage dans un trou foré (3), comprenant une tige (12, 32 ; 42 ; 52 ; 62) qui comporte un axe longitudinal (13) ainsi qu'une première extrémité (14 ; 34 ; 44 ; 54 ; 64) et une seconde extrémité (15) située à l'opposé de la première extrémité (14 ; 34 ; 44 ; 54 ; 64), un moyen d'application de charge (16) étant prévu sur la tige (12, 32 ; 42 ; 52 ; 62) et s'étendant jusqu'à la première extrémité (14 ; 34 ; 44 ; 54 ; 64), et un mécanisme d'ancrage (21, 46, 56 ; 66) étant prévu sur la tige (12, 32 ; 42 ; 52 ; 62), un joint (26 ; 37 ; 47 ; 57 ; 67) étant prévu entre le mécanisme d'ancrage (21 ; 46 ; 56 ; 66) et la première extrémité (14 ; 34 ; 44 ; 54 ; 64) de la tige (12, 32 ; 42 ; 52 ; 62) et comportant une surface de contact apte à être appliquée au moins par endroits contre la paroi du trou foré, **caractérisé en ce que,** sur la surface de contact apte à être appliquée au moins par endroits contre la paroi du trou foré, le joint (26 ; 37 ; 47 ; 57 ; 67) comporte, sur son extension axiale, diverses extensions radiales.

2. Dispositif d'ancrage à expansion selon la revendication 1, **caractérisé en ce que** le joint (26 ; 37 ; 67) est réalisé sous forme de revêtement.

3. Dispositif d'ancrage à expansion selon la revendication 1 ou 2, **caractérisé en ce que,** au moins par endroits, le joint (26 ; 37 ; 67) est réalisé de manière croissante radialement par rapport à l'axe longitudinal (13) de la tige (12, 32 ; 62) en direction de la première extrémité (14 ; 34 ; 64).

4. Dispositif d'ancrage à expansion selon une des revendications 1 à 3, **caractérisé en ce que** le joint (37) est réalisé par une succession de plusieurs cônes tronqués (38), leur plus grande surface de base (39) étant tournée vers la première extrémité (34) de la tige (32).

5. Dispositif d'ancrage à expansion selon la revendication 1 ou 2, **caractérisé en ce que** le joint (47 ; 57) comporte plusieurs reliefs (48 ; 58) disposés radialement en périphérie.

6. Dispositif d'ancrage à expansion selon la revendication 1, **caractérisé en ce que** le joint (67) est constitué d'une bande (68) qui est enroulable sur la tige (62) du dispositif d'ancrage à expansion (61) et dont la section transversale est cunéiforme.

7. Dispositif d'ancrage à expansion selon une des revendications 1 à 5**, caractérisé en ce que** le joint (26 ; 37 ; 47 ; 57 ; 67) est réalisé en matériau déformable.

8. Dispositif d'ancrage à expansion selon la revendication 6, **caractérisé en ce que** le joint (26 ; 37 ; 47 ; 57 ; 67) possède des composantes de déformation élastiques et optionnellement plastiques.

9. Dispositif d'ancrage à expansion selon une des revendications 1 à 8, **caractérisé en ce que** le joint (26) est réalisé en matériau apte à une mise en oeuvre thermoplastique.

10. Dispositif d'ancrage à expansion selon une des revendications 1 à 8, **caractérisé en ce que** le joint (37) est réalisé en élastomère réticulé.
